# EUROPÄISCHE PATENTANMELDUNG

(11) **EP 2 385 328 A2**
(43) Veröffentlichungstag der Anmeldung: **09.11.2011**
(21) Anmeldenummer: 11002856.0
(22) Anmeldetag: 06.04.2011
(51) Int. Cl.: F24J 3/08

(54) **Injektions-Kammersonde**

(30) Priorität: 04.05.2010 DE 102010019411
(71) Anmelder: STS Spezial-Tiefbau-Systeme GmbH, 65934 Frankfurt (DE)
(72) Erfinder: Swakon-Werres, Dorota, 65934 Frankfurt (DE)
(74) Vertreter: Brandt, Detlef

(57) **Zusammenfassung**

Es wird eine Injektions-Kammersonde zur Gewinnung von Wärmeenergie aus dem Erdreich, bestehend aus einem mit Vorlaufkanälen (3) zum Transport von Soleflüssigkeit in den Bodenbereich und mit mindestens einem Rücklaufkanal (2) für den Rücktransport der Soleflüssigkeit an die Erdoberfläche versehenen Rohrkörper (1), wobei Vorlaufkanäle (3) und Rücklaufkanal (2) parallel zur Mittelachse des Rohrkörpers (1) verlaufen, und mindestens einer Transportleitung (4) für eine in den Bodenbereich um die Erdwärmesonde einbringbare Suspension, welche ein für die Injektions-Kammersonde erstelltes Bohrloch füllt, vorgestellt, bei der erfindungsgemäß die Transportleitung (4) integraler Bestandteil des Rohrkörpers (1) ist.

## Beschreibung

Die Erfindung betrifft eine Injektions-Kammersonde zur Gewinnung von Wärmeenergie aus dem Erdreich, bestehend aus einem mit Vorlaufkanälen zum Transport von Soleflüssigkeit in den Bodenbereich und mit mindestens einem Rücklaufkanal für den Rücktransport der Soleflüssigkeit an die Erdoberfläche versehenen Rohrkörper, wobei Vorlaufkanäle und Rücklaufkanal parallel zur Mittelachse des Rohrkörpers verlaufen und mit mindestens einer Transportleitung für eine in den Bodenbereich um die Injektions-Kammersonde einbringbare Suspension, welche ein für die Injektions-Kammersonde erstelltes Bohrloch füllt.

Injektions-Kammersonden der eingangs geschilderten gattungsgemäßen Art stellen eine besondere Variante von Erdwärmesonden dar, die allgemein bekannt sind. Diese Erdwärmesonden finden in neuerer Zeit in verstärktem Maße Anwendung, da aufgrund intensiver Nutzung regenativer Energien vermehrt Anlagen zur Gewinnung von Wärmeenergie aus dem Boden geplant und gebaut werden.

Wesentlicher Bestandteil derartiger Anlagen sind die oben genannten Erdwärmesonden, deren Rohrkörper in das Erdreich bis zu Tiefen von 100 - 300 Metern eingebracht werden muss. Zu diesem Zweck wird ein im Durchmesser ausreichend groß bemessenes Bohrloch erstellt, in welches der Rohrkörper mit den darin enthaltenen Vorlaufkanälen und dem oder den Rücklaufkanälen eingeführt wird. Die Vorlaufkanäle sind dabei in aller Regel um einen zentralen, in der Mitte befindlichen Rücklaufkanal auf einem Kreisringsektor angeordnet.

Die Funktion der Erdwärmesonden ergibt sich dadurch, dass die durch die Vorlaufkanäle fließende Soleflüssigkeit während ihrer Durchflussphase Wärmeenergie aus dem Erdreich durch die Außenwände des Rohrkörpers aufnimmt. Am unteren Ende des Rohrkörpers erfolgt eine Umleitung der Soleflüssigkeit in den Rücklaufkanal, durch den diese wieder an die Erdoberfläche zurückgeleitet wird.

Um eine stabile Lage des Rohrkörpers innerhalb des vorgefertigten Bohrloches zu erzielen, wird dieses nach dem Einbringen des Rohrkörpers mit einer sogenannten Suspension verfüllt. Diese Suspension wird üblicherweise durch mindestens eine unabhängige Transportleitung an der Außenseite des Rohrkörpers in das Bohrloch eingeführt. Zu diesem Zweck werden bei der Montage der Erdwärmesonden von zwei getrennten Haspeln der Rohrkörper sowie die Transportleitung zusammen in das Bohrloch eingeführt, wobei in der Regel Transportleitung und Rohrkörper mittels geeigneter Hilfselemente gekoppelt werden.

Das Einbringen der Erdwärmesonden ist aufgrund der Komplexität des Montagevorganges mit zwei Abrollhaspeln gekennzeichnet durch nicht unerheblichen Kosten.

Ausgehend von den aus dem Stand der Technik bekannten Lösungen für das Einbringen einer Erdwärmesonde in das Erdreich besteht die Aufgabe der Erfindung darin, diesen Vorgang zu vereinfachen und somit die Produktions- und Montagekosten von Wärmepumpenanlagen generell herabzusetzen. Darüber hinaus soll eine zuverlässige Montage und eine lange Lebensdauer der ins Erdreich eingebrachten neuartigen als Injektions-Kammersonde bezeichneten Erdwärmesonde gewährleistet sein.

Diese Aufgabe wird in Zusammenschau mit den im gattungsbildenden Teil des Anspruches 1 beschriebenen Merkmalen für eine Injektions-Kammersonde zur

Gewinnung von Wärmeenergie aus dem Erdreich durch die im kennzeichnenden Teil offenbarte technische Lehre gelöst.

Erfindungswesentlich dabei ist es, dass die Transportleitung für die in den Bodenbereich um die Injektions-Kammersonde einbringbare Suspension integraler Bestandteil des Rohrkörpers ist.

Durch die geschilderte erfindungswesentliche Gestaltung lässt sich das komplette für das Einbringen der bislang üblichen separaten Transportleitung notwendige Equipment sparen. Darüber hinaus entfallen alle Überwachungsvorgänge, die für ein reibungsloses Einführen von Transportleitung und getrenntem Rohrkörper notwendig sind; ebenso sind alle Verbindungsvorgänge zwischen Transportleitung und Rohrkörper der Injektions-Kammersonde entbehrlich.

Zusätzlich vorteilhaft ist es, dass der einzig in das Bohrloch einzubringende Rohrkörper fabrikmäßig vorkonfektioniert werden kann, was aufgrund der industriellen Herstellprozesse eine zusätzliche Kostenreduktion neben den bereits oben erwähnten Einsparungen an Equipment sowie für die Transportleitung selbst mit sich bringt.

Durch eine entsprechende Dimensionierung des Rohrkörpers kann die Transportleitung problemlos in diesen integriert werden, so dass Einbußen in Bezug auf die Wärmegewinnung aus dem Erdreich durch die Soleflüssigkeit ausgeglichen werden.

Besondere Ausgestaltungen des Gegenstandes der Erfindung ergeben sich zusammen mit der technischen Lehre des Anspruches 1 zusätzlich aus den Merkmalen der Unteransprüche.

Es hat sich insbesondere als vorteilhaft erwiesen, wenn der Querschnitt der Transportleitung auf einem Kreisringquerschnittssektor des Rohrkörpers angeordnet ist. Durch die genannte Lage befindet sich somit um einen zentralen Rücklaufkanal ein Ring aus mehreren Vorlaufkanälen und mindestens einer Transportleitung.

Für den Fall, dass große Bohrtiefen für eine ausreichende Gewinnung von Wärmeenergie notwendig sind, kann es darüber hinaus vorteilhaft sein, zwei Transportleitungen auf dem Kreisringquerschnittssektor anzuordnen. Für diesen speziellen Anwendungsfall ist es zweckmäßig, eine Transportleitung in einem Mittelbereich zwischen dem oberen und unteren Ende des Rohrkörpers mit einer Austrittsöffnung zur Außenseite des Rohrkörpers zu versehen. Auf diese Weise kann an zwei unterschiedlichen Orten des Bohrloches die zur Fixierung des Rohrkörpers notwendige Suspension eingebracht werden, so dass sich evtl. aufgrund der Bohrlochtiefe auftretenden Zeitverzögerungen für die Befüllung signifikant herabsetzen lassen. Zweckmäßig ist im Zusammenhang mit der zusätzlichen Austrittsöffnung der zweiten Transportleitung die Abdichtung dieser Transportleitung unterhalb der Austrittsöffnung mit einem Verschlusselement, beispielsweise einem Verschlussstopfen.

Um das Befüllen des Bohrloches mit der Suspension zeitlich möglichst kurz zu gestalten, kann es darüber hinaus vorteilhaft sein, die Transportleitung im Querschnitt größer zu bemessen als die Breite des Kreisringquerschnittssektors des Rohrkörpers. Auf diese Weise entsteht beispielsweise an der Außenseite des Rohrkörpers ein Wulst, welcher zusätzlich vorteilhaft für die Fixierung des Rohrkörpers innerhalb des Bohrloches sein kann.

Entsprechend einer vorteilhaften Weiterbildung des Gegenstandes der Erfindung kann die am unteren, ins Erdreich einbringbaren Ende der Transportleitung angeordnete Öffnung an eine Austrittsleitung gekoppelt sein, welche in einem am unteren freien Ende des Rohrkörpers festgelegten Fußelement eingebracht ist, wobei die Austrittsleitung wiederum eine Öffnung zum Umgebungsbereich der Injektions-Kammersonde aufweist. Durch diese Gestaltung ist gewährleistet, dass die Suspension am äußeren Ende der Rohrkörpers austritt und somit ein zuverlässiges Befüllen des Bohrloches gewährleistet ist.

Bei der Ausgestaltung des Fußelementes kann es darüber hinaus zweckmäßig sein, wenn das Fußelement eine Aufnahmevorrichtung für einen Beschwerungskörper aufweist. Das Aufnahmeelement kann dabei in einfacher Weise als quer zur Längsachse des Rohrkörpers verlaufende Durchgangsbohrung ausgestaltet sein. Die Befestigung eines Beschwerungskörpers dient dabei dem leichteren Einbringen und insbesondere Absenken des Rohrkörpers in dem vorhandenen Bohrloch.

Damit der Rohrkörper möglichst mittig im Bohrloch platziert wird und um Reibungsverluste an den Bohrlochwänden herabzusetzen, kann es darüber hinaus zweckmäßig sein, den Rohrkörper an seiner Außenseite mit mindestens einem Abweiskörper zu versehen. Dieser Abweiskörper kann als umlaufendes Ringelement gestaltet sein und sollte vorteilhafterweise eine strömungsgünstige Form aufweisen.

Um die Lage der Transportleitungen innerhalb des Rohrkörpers auf dem Kreisringquerschnittssektor von außen leichter lokalisieren zu können, kann es darüber hinaus vorteilhaft sein, wenn der Rohrkörper an seiner Außenseite im Bereich der Transportleitung eine Mehrzahl von Kennzeichnungselementen über die Länge des Rohrkörpers verteilt aufweist.

Es hat sich darüber hinaus als zweckmäßig erwiesen, die Innenwände der Vorlaufkanäle mit einer aufgerauten Oberfläche zu versehen. Durch die aufgeraute Oberfläche entsteht innerhalb der Vorlaufkanäle eine turbulente Strömung der Soleflüssigkeit, was unter thermodynamischen Gesichtspunkten für den Wärmeübergang von der Rohrkörperwandung auf die Soleflüssigkeit vorteilhaft ist.

Wird die Außenwand des Rohrkörpers darüber hinaus mit einer aufgerauten Oberfläche versehen, so steigert dies die Adhäsion zwischen Rohrkörperwandung und Suspension, so dass eine hochgradig stabile Verbindung erzeugt wird.

Die Stabilität der Verbindung zwischen Rohrkörperwandung und Suspension kann darüber hinaus gesteigert werden, dass die Außenwand des Rohrkörpers eine im Querschnitt wellenförmige Kontur aufweist, wodurch die Verbindungsfläche insgesamt erhöht wird.

Für den Montagevorgang des Rohrkörpers kann es darüber hinaus zweckmäßig sein, dass der Rohrkörper an seinem oberen, der Erdoberfläche zugewandten Ende während der Montage der Injektions-Kammersonde im Erdreich durch einen lösbar festgelegten Montagedeckel verschließbar ist, welcher verschließbare Zugangsöffnungen für die Transportleitung(en) der Suspension aufweist. Der Montagedeckel stellt sicher, dass eine Verbindung zwischen den Transportleitungen und den Vorlaufkanälen sowie dem Rücklaufkanal zuverlässig ausgeschlossen wird, so dass Verschmutzungen bzw. Verstopfungen der genannten Kanäle vermieden werden. Nach der Montage wird der Rohrkörper zweckmäßigerweise an seinem oberen, der Erdoberfläche zugewandten Ende statt des Montagedeckels durch einen lösbar festgelegten Anschlussdeckel verschlossen, welcher Verbindungselemente zur Koppelung der Vorlaufkanäle und des Rücklaufkanals mit Rohrleitungen einer Pumpenanlage aufweist.

Auf diese Weise kann im Gegensatz zum Stand der Technik die überirdische Anbindung der Injektions-Kammersonde durch einen besonders flexiblen Rohrleitungsbau erfolgen, so dass auf die Verwendung des Rohrkörpers im oberirdischen Bereich wie bislang üblich verzichtet werden kann. Dies bringt sowohl unter Handhabungsgesichtspunkten als auch in finanzieller Hinsicht nicht zu unterschätzende Vorteile.

Der Anschlussdeckel kann entsprechend einer vorteilhaften Weiterbildung des Gegenstandes der Erfindung eine verschließbare Öffnung zum Rücklaufkanal, zu mindestens einem der Vorlaufkanäle und/ oder mindestens einer der nicht genutzten Transportleitungen aufweisen. Durch diesen Zugang lassen sich ggf. nach der Montage Temperaturmesssonden nutzen.

Zusätzlich kann vorteilhaft sein, wenn die Aussenseite des Rohrkörpers aus einem Rohrwerkstoff höherer Leitfähigkeit hergestellt ist als die Innenseite des Rohrkörpers.

Nachfolgend wird ein Ausführungsbeispiel des Gegenstandes der Erfindung anhand der beigefügten Zeichnungen näher erläutert.

Es zeigt
- Figur 1: eine Querschnittdarstellung einer ersten Ausgestaltungsvariante der erfindungsgemäßen Injektions-Kammersonde,
- Figur 2:: eine alternative Ausgestaltungsvariante der erfindungsgemäßen Injektions-Kammersonde in Querschnittdarstellung,
- Figur 3:: einen Längsschnitt durch einen Mittelbereich der erfindungsgemäßen Injektions-Kammersonde,
- Figur 4:: einen Längsschnitt durch das untere Ende der Injektions-Kammersonde,
- Figur 5:: eine Längsschnittdarstellung eines Teilbereiches der Injektions-Kammersonde,
- Figur 6:: den oberen Bereich der Injektions-Kammersonde mit aufgesetztem Montagedeckel,
- Figur 7:: eine Draufsicht entsprechend der Ansicht B aus Figur 6 auf den Montagedeckel,
- Figur 8:: eine Schnittdarstellung durch den oberen Endbereich der Injektions-Kammersonde mit aufgesetztem Anschlussdeckel und
- Figur 9:: eine Draufsicht entsprechend der Ansicht C aus Figur 8 auf den Anschlussdeckel.

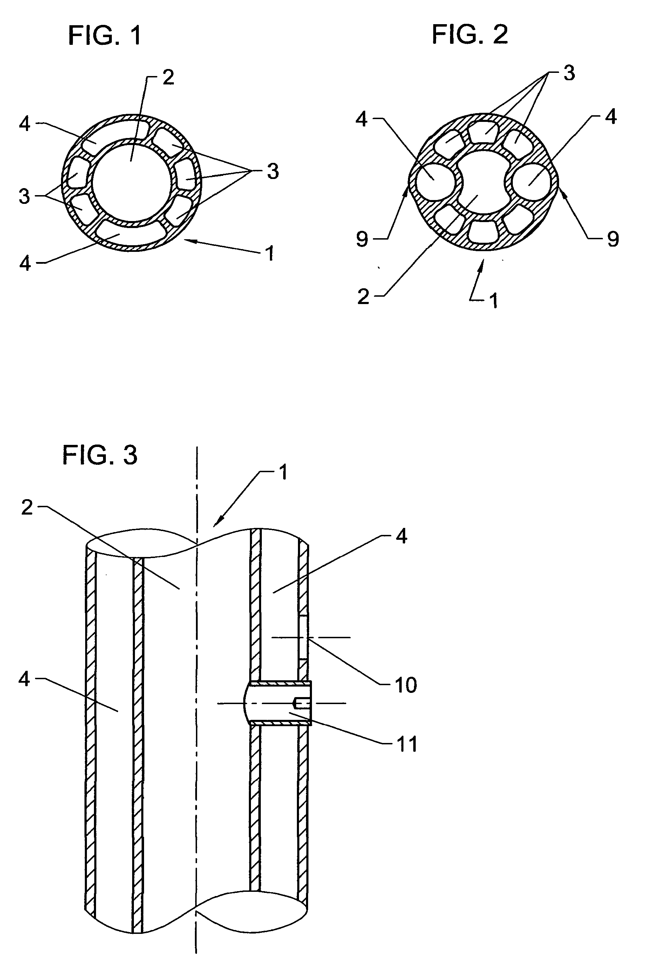

Die in den Figuren 1 und 2 erfindungsgemäße Injektions-Kammersonde besteht im Wesentlichen aus einem Rohrkörper 1, welcher senkrecht in das Erdreich eingebracht wird. Wie aus der Querschnittsdarstellung der Figur 1 ersichtlich ist, befinden sich im Inneren des Rohrkörpers 1 ein zentraler Rücklaufkanal 2 sowie mehrere auf einem Kreisringquerschnittssektor um den Rücklaufkanal 2 angeordnete Vorlaufkanäle 3. Auf dem Kreisringquerschnittssektor befinden sich außerdem im dargestellten Ausführungsbeispiel zwei Transportleitungen 4. Alle Leitungen und Kanäle verlaufen parallel zur Mittellängsachse des Rohrkörpers.

Hinsichtlich der Funktionsweise der Injektions-Kammersonde ist festzuhalten, dass durch die Vorlaufkanäle 3 eine Soleflüssigkeit geleitet wird, die auf ihrem Weg durch den Rohrkörper 1 Wärmeenergie aus dem Erdreich, welches sich um die im Boden verankerte Injektions-Kammersonde befindet, aufnimmt. Der Rohrkörper 1 kann eine Länge von 100 bis 300 Metern aufweisen.

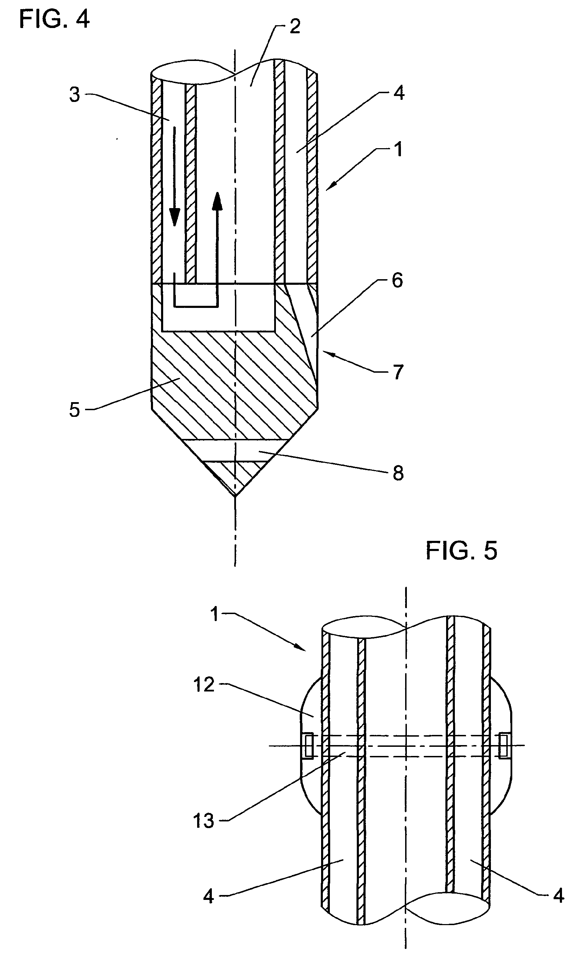

Am unteren Ende der Injektions-Kammersonde, das in der Figur 4 dargestellt ist, befindet sich ein Fußelement 5, welches dazu dient, den Soleflüssigkeitsstrom von den Vorlaufkanälen 3 in den zentralen Rücklaufkanal 2 umzulenken. In diesem Rücklaufkanal 2 steigt die erwärmte Soleflüssigkeit wieder auf und kann am oberen Ende der Injektions-Kammersonde mittels einer entsprechenden Rohrleitung der weiteren Verwendung zugeführt werden.

Der Rohrkörper 1 wird in notwendiger Länge in das Erdreich eingebracht, in dem man ihn in ein vorbereitetes Bohrloch herablässt. Das Bohrloch ist dabei in seinem Durchmesser so groß bemessen, dass ein problemlose Einführen des Rohrkörpers 1 gewährleistet ist. Um den Rohrkörper 1 innerhalb des Bohrloches zu fixieren, ist es notwendig, nach dem Absenken den Zwischenraum zwischen Bohrlochwandung und Rohrkörperaußenwandung mit einer Suspension zu verfüllen. Zum Einbringen der Suspension in das Bohrloch sind die im Rohrkörper auf dem Kreisringquerschnittssektor der Vorlaufkanäle 3 zusätzlich angeordneten Transportleitungen 4 vorgesehen. In diese Transportleitungen 4 wird die Suspension zur Fixierung des Rohrkörpers nach dem Einsetzen von Letzterem in das Bohrloch eingepresst, so dass sie wie dies aus Figur 4 ersichtlich ist, am unteren Ende durch das Fußelement 5 austreten kann. Zu diesem Zweck ist die Transportleitung 4 an eine Austrittsleitung 6 gekoppelt, die in dem am unteren freien Ende des Rohrkörpers festgelegten Fußelement 5 eingebracht ist, wobei die Austrittsleitung 6 eine Öffnung 7 zum Umgebungsbereich der Injektions-Kammersonde aufweist. Durch die geschilderte Gestaltung ist gewährleistet, dass die Suspension annähernd am tiefsten Punkt der Injektions-Kammersonde austreten kann.

Aus der Figur 4 ist ergänzend ersichtlich, dass das Fußelement 5 an seinem unteren, dem Rohrkörper 1 abgewandtem Ende spitzzulaufend ausgeformt ist und in dem spitzzulaufenden Bereich eine Aufnahmevorrichtung 8 für einen nicht näher dargestellten Beschwerungskörper eingebracht ist. Die Aufnahmevorrichtung 8 ist im dargestellten Ausführungsbeispiel als Durchgangsbohrung dargestellt.

Die Querschnittsgestaltung des Rohrkörpers kann natürlich in Bezug auf die Anordnung und Ausgestaltung des Rücklaufkanals 2, der Vorlaufkanäle 3 und der Transportleitungen 4 auch eine andere Form aufweisen, wie dies beispielsweise in der Darstellung der Figur 2 gezeigt ist. In diesem Ausführungsbeispiel sind die Transportleitungen 4 kreisförmig gestaltet und vom Durchmessermaß so ausgeführt, dass sie eine Ausbeulung 9 der Rohrkörperaußenwandung im Bereich der Transportleitungen 4 hervorrufen. Die Ausbeulungen 9 bewirken eine Vergrößerung der Anlagefläche für die um den Rohrkörper 1 befindliche Suspension, so dass dadurch eine noch bessere Festlegung des Rohrkörpers 1 innerhalb des Bohrloches erfolgen kann. Gleichzeitig wird durch den Kreisquerschnitt der Transportleitungen 4 auch der Querschnitt des Rücklaufkanals 2 verändert, was jedoch bei ausreichender Dimensionierung des Gesamtquerschnittes des Rohrkörpers 1 keine negativen Auswirkungen auf die Gesamtfunktion der Injektions-Kammersonde hat.

Natürlich ist es denkbar, den Rohrkörper 1 einer erfindungsgemäßen Injektions-Kammersonde auch nur mit einer Transportleitung 4 zu versehen. Zwei Transportleitungen 4 wie in den Figuren 1 und 2 dargestellt sind immer dann von Vorteil, wenn Injektions-Kammersonden mit großer Länge im Bereich zwischen 100 und 300 Metern verwendet werden. In diesem Fall ist es zum Verfüllen des Bohrloches von Vorteil, die Austrittsöffnung einer Transportleitung 4 am unteren Ende des Rohrkörpers im Bereich des Fußelementes 5 zu haben, wie dies in der Figur 4 dargestellt ist.

Darüber hinaus sollte entsprechend der Darstellung der Figur 3 in einem Mittenbereich zwischen dem oberen und unteren Ende der Injektions-Kammersonde eine Austrittsöffnung 10 vorhanden sein, durch die die Suspension in entsprechender Höhe des Rohrkörpers 1 seitlich austreten kann. Um diesen Austritt zu ermöglichen, ist unterhalb der Austrittsöffnung 10 die Transportleitung 4 mit einem Verschlusselement 11, beispielsweise wie in der Figur 3 dargestellt, in Form einer Madenschraube abgedichtet.

Um das Einführen des Rohrkörpers 1 in das Bohrloch zu erleichtern und gleichzeitig möglichst geringe Reibkräfte an der Bohrlochwandung beim Herablassen des Rohrkörpers 1 zu generieren, kann es entsprechend einer vorteilhaften Ausgestaltung, die in der Figur 5 dargestellt ist, vorteilhaft sein, über die Länge des Rohkörpers 1 verteilt einen oder mehrere Abweiskörper 12 anzuordnen. Diese Abweiskörper sind vorzugsweise ringförmig ausgestaltet und an ihrem oberen und unteren Ende abgerundet, so dass sich eine strömungsoptimierte Form ergibt. Ein Abweiskörper 12 kann jeweils mittels eines Befestigungsbandes 13 am Rohrkörper 1 festgelegt werden.

Um die Lage der Transportleitungen 4 am Umfang des Rohrkörpers von außen kenntlich zu machen, kann es darüber hinaus von Vorteil sein, wenn der Rohrkörper an seiner Außenseite im Bereich der Transportleitung(en) eine Mehrzahl von Kennzeichnungselementen aufweist. Diese Kennzeichnungselemente können beispielsweise Einkerbungen, Aufkleber, Signierungen oder dgl. sein.

Um den Wärmeübergang zwischen den Rohrkörperaußenwänden und der innerhalb der Vorlaufleitungen 3 fließenden Soleflüssigkeit zu verbessern, ist es möglich, die Innenwandungen der Vorlaufkanäle 3 mit einer aufgerauten Oberfläche zu versehen.

Zur Verbesserung der Adhäsion zwischen Rohrkörper 1 und der außen um den Rohrkörper 1 befindlichen Suspension, ist es darüber hinaus denkbar, auch die Außenwand des Rohrkörpers 1 mit einer aufgerauten Oberfläche zu versehen.

Eine weitere Verbesserung der Anhaftung der Suspension kann dadurch erzielt werden, dass die Außenwand des Rohrkörpers insgesamt eine wellenförmige Kontur aufweist, das heißt, dass auf den Gesamtaußenumfang des Rohrkörpers 1 Ausbuchtungen analog derjenigen Ausbuchtungen 9 wie sie in der Figur 2 dargestellt sind, angeordnet werden. Die insgesamt wellenförmige Kontur vergrößert die Anhaftungsfläche für der Suspension und dient somit einer weiteren Verbesserung der Festlegung des Rohrkörpers 1 innerhalb des Bohrloches.

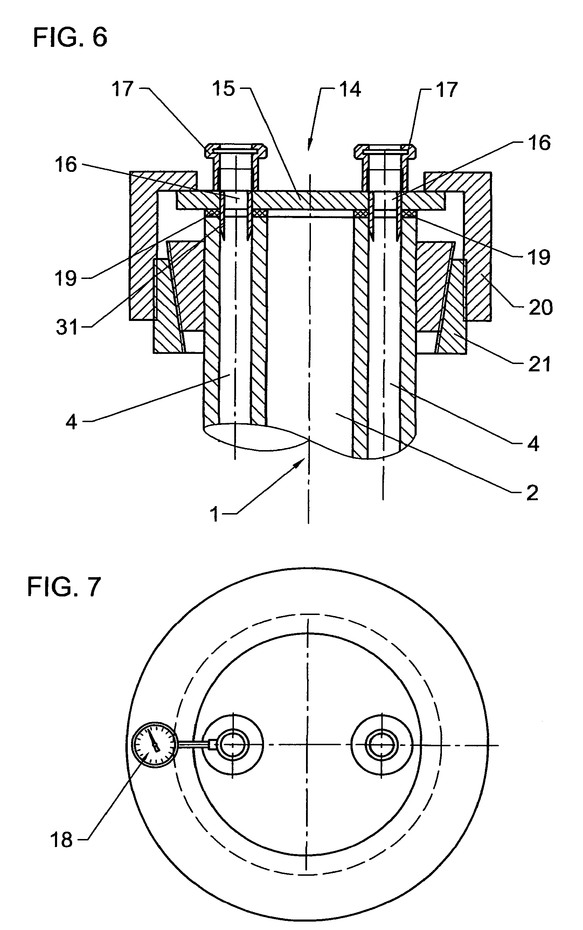

Um nach dem Einbringen des Rohrkörpers 1 in das Bohrloch letzteres mit der Suspension zu verfüllen, ist es notwendig, diese in die Transportleitungen 4 einzubringen. Zu diesem Zweck wird auf das obere freie Ende des Rohrkörpers 1, welcher aus dem Erdreich herausragt, ein Montagedeckel 14 aufgesetzt, wie er in der Figur 6 dargestellt ist. Der Montagedeckel 14 besteht aus einer kreisförmigen Platte 15, in die an den Stellen, die oberhalb der Transportleitungsöffnungen liegen, Zugangsöffnungen 16 in Form von Durchgangsbohrungen eingebracht sind. An der dem Rohrkörper 1 abgewandten Außenseite der Platte 15 befinden sich jeweils Anschlussstutzen 17, an welche Rohrleitungen zur Zuführung der Suspension angeschlossen werden können. An diese Anschlussstutzen 17 ist auch, wie dies der Figur 7 zu entnehmen ist, der Anschluss eines Kontrollmanometers 18 zur Messung des Verpressdruckes für die Suspension möglich.

Der Montagedeckel ist so gestaltet, dass mittels entsprechender Dichtungen 19 eine Abdichtung der Transportleitungen 4 gegenüber den außerdem im Rohrkörper 1 befindlichen Vorlaufkanälen 3 und dem Rücklaufkanal 2 gewährleistet ist. Der Montagedeckel 14 ist mittels eines Klemmringes 20 und einer Verschraubung 21 am oberen Ende des Rohrkörpers 1 festgelegt. Zum leichteren Aufsetzen des Montagedeckels 14 kann dieser mit Zentrierhilfen 31 ausgestattet werden, die in den oberen Endbereich der Transportkanäle 4 hineinreichen. Die gesamte konstruktive Gestaltung erlaubt eine problemlose und schnelle Montage und Demontage des Montagedeckels 14 vor und nach dem Einbringen der Suspension in die Transportleitungen 4.

Ist das Verfüllen des Bohrloches mittels der Suspension abgeschlossen und der Montagedeckel 14 abgenommen, so wird stattdessen auf das obere freie Ende des Rohrkörpers 1 ein Anschlussdeckel 22 aufgesetzt. Der Anschlussdeckel 22 besteht wiederum aus einer ringförmigen Platte 23, die so ausgestaltet ist, dass sie sowohl Durchgangsbohrungen 24 als Zugang zu den Vorlaufkanälen 3 als auch eine zentrale Durchgangsbohrung 25 als Zugang zum Rücklaufkanal 2 aufweist.

An der dem Rohrkörper 1 abgewandten Außenseite befindet sich ein mit einem Rücklaufanschluss 26 und einem Vorlaufanschluss 27 versehenes Gehäuse 28. Das Gehäuse 28 ist in seinem Innerem so aufgebaut, dass durch den Rücklaufanschluss 26 und den Vorlaufanschluss 27 jeweils der Rücklaufkanal 2 sowie die Vorlaufkanäle 3 mit Soleflüssigkeit beaufschlagbar sind.

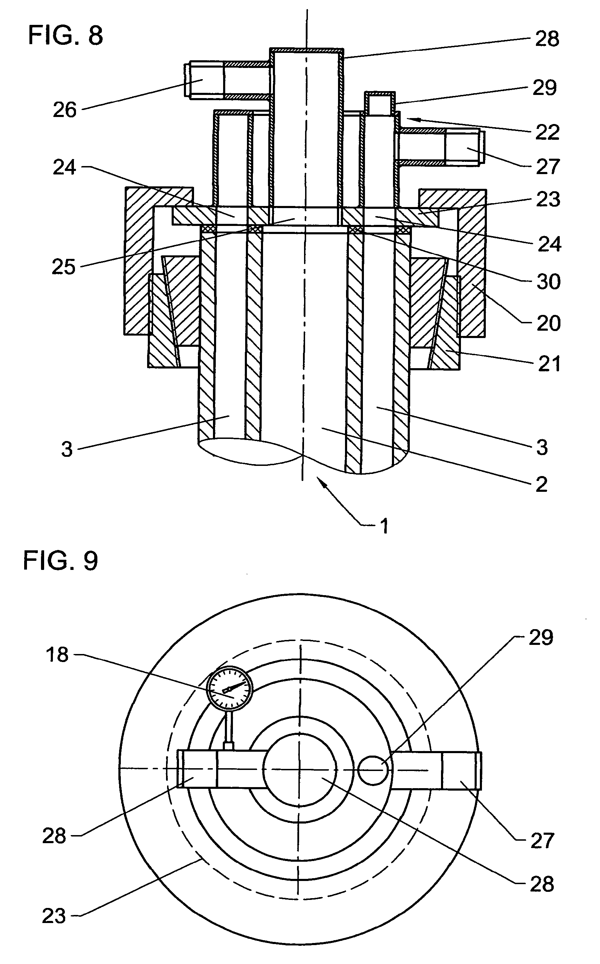

Darüber hinaus ist am Gehäuse 28 ein Blindstopfen 29 vorgesehen, durch den einer der Vorlaufkanäle 3 oder eine nicht genutzte Transportleitung 4 zugänglich ist, so dass ggf. eine Messsonde zur Temperaturmessung der zirkulierenden Soleflüssigkeit eingesetzt werden kann. Darüber hinaus besteht die Möglichkeit, das Gehäuse 28 zusätzlich mit einem in der Figur 8 nicht näher dargestellten Blindstopfen zu versehen, so dass auch innerhalb des Rücklaufkanals 2 eine Messsonde zur Temperaturmessung eingesetzt werden kann.

Die Befestigung des Anschlussdeckels 22 erfolgt analog der Darstellung der Figur 6 mittels eines Klemmringes 20 und einer Verschraubung 21, durch die die Platte 23 des Anschlussdeckels 22 auf das obere Ende des Rohrkörpers 1 aufgepresst werden kann. Zur Abdichtung des Rücklaufkanals 2 sowie der Vorlaufkanäle 3 ist zwischen dem oberen Ende des Rohrkörpers 1 und der Unterseite der Platte 23 eine Dichtung 30 eingesetzt.

### Bezugszeichenliste

- 1: Rohrkörper
- 2: Rücklaufkanal
- 3: Vorlaufkanal
- 4: Transportleitung
- 5: Fußelement
- 6: Austrittsleitung
- 7: Öffnung
- 8: Aufnahmevorrichtung
- 9: Ausbeulung
- 10: Austrittsöffnung
- 11: Verschlusselement
- 12: Abweiskörper
- 13: Befestigungsband
- 14: Montagedeckel
- 15: Platte
- 16: Durchgangsbohrung
- 17: Anschlussstutzen
- 18: Kontrollmanometer
- 19: Dichtung
- 20: Klemmring
- 21: Verschraubung
- 22: Anschlussdeckel
- 23: Platte
- 24: Durchgangsbohrung
- 25: Durchgangsbohrung
- 26: Rücklaufanschluss
- 27: Vorlaufanschluss
- 28: Gehäuse
- 29: Blindstopfen
- 30: Dichtung
- 31: Zentrierhilfe

## Patentansprüche

1. Injektions-Kammersonde zur Gewinnung von Wärmeenergie aus dem Erdreich, bestehend aus einem mit Vorlaufkanälen (3) zum Transport von Soleflüssigkeit in den Bodenbereich und mit mindestens einem Rücklaufkanal (2) für den Rücktransport der Soleflüssigkeit an die Erdoberfläche versehenen Rohrkörper (1), wobei Vorlaufkanäle (3) und Rücklaufkanal (2) parallel zur Mittelachse des Rohrkörpers (1) verlaufen, und mindestens einer Transportleitung (4) für eine in den Bodenbereich um die Injektions-Kammersonde einbringbare Suspension, welche ein für die Injektions-Kammersonde erstelltes Bohrloch füllt,
**dadurch gekennzeichnet, dass**
die Transportleitung integraler Bestandteil des Rohrkörpers ist.

2. Injektions-Kammersonde nach Anspruch 1
**dadurch gekennzeichnet, dass**
der Querschnitt der Transportleitung (4) auf einem Kreisringquerschnittssektor des Rohrkörpers (1) angeordnet ist.

3. Injektions-Kammersonde nach Anspruch 1 oder 2,
**dadurch gekennzeichnet, dass**
zwei Transportleitungen (4) auf dem Kreisringquerschnittssektor angeordnet sind.

4. Injektions-Kammersonde nach Anspruch 2 oder 3,
**dadurch gekennzeichnet, dass**
die Transportleitungen im Querschnitt größer bemessen sind als die Breite des Kreisringquerschnittssektors des Rohrkörpers.

5. Injektions-Kammersonde nach einem der Ansprüche 1 bis 4,
**dadurch gekennzeichnet, dass**
die am unteren, ins Erdreich einbringbaren Ende der Transportleitung angeordnete Öffnung der Transportleitung (4) an eine Austrittsleitung (6) gekoppelt ist, welche in einem am unteren freien Ende des Rohrkörpers festgelegtem Fußelement (5) eingebracht ist, wobei die Austrittsleitung (6) wiederum einen Öffnung (7) zum Umgebungsbereich der Injektions-Kammersonde aufweist.

6. Injektions-Kammersonde nach Anspruch 5
**dadurch gekennzeichnet, dass**
die Öffnung (7) der Austrittsleitung (6) im unteren, dem Rohrkörper (1) abgewandten Bereich des Fußelementes (5) angeordnet ist.

7. Injektions-Kammersonde nach einem der Ansprüche 5 oder 6,
**dadurch gekennzeichnet, dass**
das Fußelement (5) eine Aufnahmevorrichtung (8) für einen Beschwerungskörper aufweist.

8. Injektions-Kammersonde nach Anspruch 7,
**dadurch gekennzeichnet, dass**
die Aufnahmevorrichtung (8) als quer zur Längsachse des Rohrkörpers (1) verlaufende Durchgangsbohrung ausgestaltet ist.

9. Injektions-Kammersonde nach Anspruch 3,
**dadurch gekennzeichnet, dass**
die weitere Transportleitung (4) in einem Mittenbereich zwischen dem oberen und unteren Ende der Injektions-Kammersonde mit einer Austrittsöffnung (10) zur Außenseite des Rohrkörpers (1) versehen ist.

10. Injektions-Kammersonde nach Anspruch 9,
**dadurch gekennzeichnet, dass**
die weitere Transportleitung unterhalb der Austrittsöffnung mit einem Verschlusselement (11) abgedichtet ist.

11. Injektions-Kammersonde nach einem der Ansprüche 1 bis 10,
**dadurch gekennzeichnet, dass**
der Rohrkörper (1)an seiner Außenseite mit mindestens einem Abweiskörper (12) versehen ist.

12. Injektions-Kammersonde nach einem der Ansprüche 1 bis 11,
**dadurch gekennzeichnet, dass**
der Rohrkörper (1) an seiner Außenseite im Bereich einer Transportleitung (4) eine Mehrzahl von Kennzeichnungselementen aufweist.

13. Injektions-Kammersonde nach einem der Ansprüche 1 bis 12,
**dadurch gekennzeichnet, dass**
die Innenwände der Vorlaufkanäle (3) eine aufgeraute Oberfläche aufweisen.

14. Injektions-Kammersonde nach einem der Ansprüche 1 bis 13,
**dadurch gekennzeichnet, dass**
die Außenwand des Rohrkörpers (1) eine aufgeraute Oberfläche aufweist.

15. Injektions-Kammersonde nach einem der Ansprüche 1 bis 14,
**dadurch gekennzeichnet, dass**
die Außenwand des Rohrkörpers (1) eine im Querschnitt wellenförmige Kontur aufweist.

16. Injektions-Kammersonde nach einem der Ansprüche 1 bis 15,
**dadurch gekennzeichnet, dass**
der Rohrkörper (1) an seinem oberen, der Erdoberfläche zugewandten Ende während der Montage der Injektions-Kammersonde im Erdreich durch einen lösbar festgelegten Montagedeckel (14) verschließbar ist, welcher Zugangsöffnungen (16) für die Transportleitung(en) (4) der Suspension aufweist.

17. Injektions-Kammersonde nach einem der Ansprüche 1 bis 16,
**dadurch gekennzeichnet, dass**
der Rohrkörper (1) an seinem oberen, der Erdoberfläche zugewandten Ende nach dem Einbringen der Injektions-Kammersonde in das Erdreich durch einen lösbar festgelegten Anschlussdeckel (22) verschließbar ist, welcher Verbindungselemente (26,27) zur Kopplung der Vorlaufkanäle (3) und des Rücklaufkanals (2) mit Rohrleitungen eine Pumpenanlage aufweist.

18. Injektions-Kammersonde nach einem der Ansprüche 1 bis 17,
**dadurch gekennzeichnet, dass**
der Anschlussdeckel (22) eine verschließbare Öffnung (29) zum Rücklaufkanal (2) aufweist.

19. Injektions-Kammersonde nach einem der Ansprüche 1 bis 18,
**dadurch gekennzeichnet, dass**
der Anschlussdeckel (22) eine verschließbare Öffnung (29) zu mindestens einem Vorlaufkanal (3) aufweist.

20. Injektions-Kammersonde nach einem der Ansprüche 1 bis 19,
**dadurch gekennzeichnet, dass**
der Anschlussdeckel (22) eine verschließbare Öffnung (29) zu mindestens einer Transportleitung (4) aufweist.

21. Injektions-Kammersonde nach einem der Ansprüche 1 bis 20,
**dadurch gekennzeichnet, dass**
die Aussenseite des Rohrkörpers (1) aus einem Rohrwerkstoff höherer Leitfähigkeit hergestellt ist als die Innenseite des Rohrkörpers (1).
